# EUROPÄISCHE PATENTANMELDUNG

(11) **EP 0 930 222 A2**
(43) Veröffentlichungstag der Anmeldung: **21.07.1999**
(21) Anmeldenummer: 99810029.1
(22) Anmeldetag: 15.01.1999
(51) Int. Cl.: B62D 33/04

(54) **Verbindungselement zum Verbinden von Leichtbauplatten**

(30) Priorität: 15.01.1998 CH 8898
(71) Anmelder: Bafi, Balmer U., 8604 Volketswil (CH)
(72) Erfinder: Balmer, Urs, 8604 Volketswil (CH)
(74) Vertreter: Gachnang, Hans Rudolf

(57) **Zusammenfassung**

Das Verbindungselement umfasst eine Aussenabdeckung (11) und eine Innenabdeckung (9), welche in Anlage mit dem Kantenbereich von zu verbindenden Leichtbauplatten (1) gelangen und mit diesen verklebt werden. Das Verbindungselement ermöglicht ein Verbinden der Platten (1) ohne Anbringen von in die Leichtbauplatte eindringenden Schrauben. Die Verbindung ist absolut wasserdicht und verwindungsfrei.

## Beschreibung

Gegenstand der Erfindung ist ein Verbindungselement zum Verbinden von Leichtbauplatten gemäss Oberbegriff des Patentanspruchs 1.

Leichtbauplatten finden heute Verwendung im Hausbau und vor allem auch für Aufbauten von Wohnwagen und Wohnmobilen sowie für gekühlte Aufbauten von Lastwagen. Die Leichtbauplatten, mit denen Wohnwagen und Wohnmobile aufgebaut sind, werden üblicherweise an den Ecken durch L-förmige Eckprofile miteinander verbunden. Um Kältebrücken zu vermeiden, können sich die Kanten der Leichtbauplatten überlappen und durch die L-förmigen Profile abgedeckt sein. Bei einer solchen Verbindung kann nur eine beschränkte Steifigkeit erreicht werden, da das stirnseitige Verbinden der ersten Platte mit der Oberfläche der zweiten Platte keine belastbare Verbindung darstellt.

Aufgabe der Erfindung ist die Schaffung eines Verbindungselements, mit dem sowohl rechtwinklig aufeinander auftreffende Leichtbauplatten als auch flächenförmig nebeneinander liegende Platten unlösbar und mit maximaler Steifigkeit und Verwindungsfestigkeit verbunden werden können.

Gelöst wird diese Aufgabe durch ein Verbindungselement mit den Merkmalen des Patenanspruchs 1. Vorteilhafte Ausgestaltungen der Erfindung werden in den abhängigen Ansprüchen definiert.

Mit dem erfindungsgemässen Verbindungselement gelingt es in einer ersten Ausführung der Erfindung, die Platten mit einer Aussenabdeckung und einer Innenabdeckung, welche gegenseitig nicht miteinander verbunden sein müssen und welche aus Aluminium oder aus Kunststoff bestehen, unlösbar miteinander zu verbinden. Die Verbindung erfolgt einzig durch Kleben, und es müssen keine die Haut der Leichtbauplatten verletzende Schrauben angebracht werden. Durch die durchgehende Verklebung der Platten mit der Aussen- und der Innenabdeckung ist eine absolut wasserdichte Verbindung gewährleistet, so dass weder Wasser ins Innere des Fahrzeugs noch, und dies ist sehr wichtig, ins Innere der Leichtbauplatten eindringen kann. Die Leichtbauplatten können mit den Verbindungselement nicht nur winkelig zueinander, sondern auch in der Ebene nebeneinander liegend verbunden werden. In einer besonderen zweiten Ausführungsform des Verbindungselements dient letzteres als seitlicher Abschluss des Bodens und unterer Abschluss der Aussenwand. Zusätzlich können die Verbindungselemente mit Nuten versehen sein, in welche der Keder zum Anbringen eines Vorzeltes oder einer Sonnenschutzvorrichtung dient, so dass auch dafür keine Bohrungen an der Aussenwand nötig sind.

Anhand dreier illustrierter Ausführungsbeispiele wird die Erfindung näher erläutert. Es zeigen
- Figur 1: einen Querschnitt durch eine Innenabdeckung für zwei nebeneinander liegende Leichtbauplatten,
- Figur 2: einen Querschnitt durch eine Aussenabeckung für zwei nebeneinander liegende Leichtbauplatten,
- Figur 3: einen Querschnitt durch zwei miteinander verbundene nebeneinander liegende Leichtbauplatten,
- Figur 4: einen Querschnitt durch eine Aussenabdeckung für zwei winklig zueinander liegende Abdeckplatten,
- Figur 5: einen Querschnitt durch eine Innenabdeckung für zwei winklig zueinander liegende Abdeckplatten,
- Figur 6: einen Querschnitt durch zwei miteinander verbundene rechtwinklig liegende Leichtbauplatten,
- Figur 7: einen Querschnitt durch eine Innenabdeckung für die Verbindung einer Wand- und einer Bodenplatte,
- Figur 8: einen Querschnitt durch eine Aussenabdeckung für die Verbindung einer Wand- und einer Bodenplatte,
- Figur 9: einen Querschnitt durch eine mit der Bodenplatte verbundene Wandplatte.

Die beiden in Figur 3 miteinander verbundenen Leichtbauplatten 1 weisen einen Kern 2 aus einem geschlossenporigen Schaum und beidseitig eine Deckschicht 3,5 auf. Die Deckschichten 3,5 weisen, je nach Anforderung an die Festigkeit der Leichtbauplatte 1, eine angepasste Dicke von 0,5 bis 5mm auf. Die Deckschichten 3,5 bestehen vorzugsweise aus Polyester oder Epoxidharz. Sie können zudem eine Armierung aus Glasfasern oder einer hochfesten Kunststoff- oder Kohlefaser aufweisen.

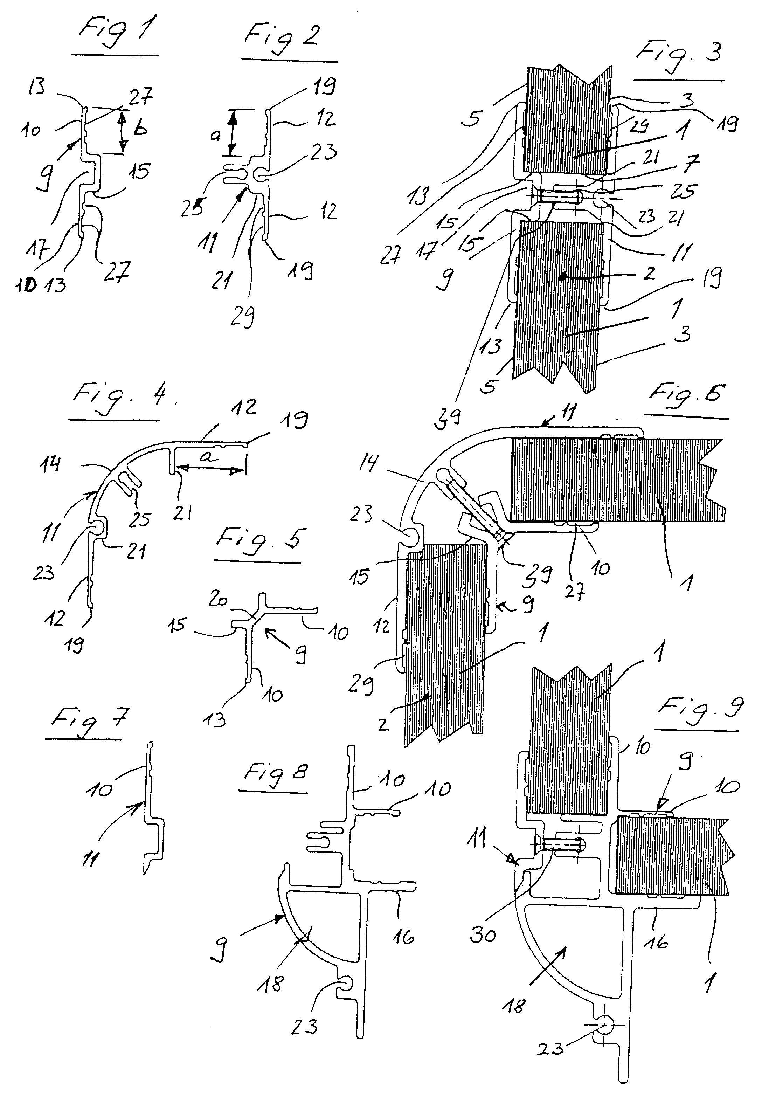

An den Stirnkanten 7 liegt der Kern 2, welcher die beiden Deckschichten 3,5 beabstandet trägt, frei. Zur stirnseitigen, flächenförmigen Verbindung zweier Leichtbauplatten 1 dienen gemäss Figuren 1-3 eine Innenabdeckung 9 und eine Aussenabdeckung 11. Sowohl die Innen- 9 als auch die Aussenabdeckung 11 bestehen aus Profilmaterial aus gezogenem Aluminium oder aus stranggepresstem Kunststoff. Die Innenabdeckung 9 weist in einem Abstand b von den Kanten 13 je einen Anschlag 15 auf, an denen die Stirnflächen 7 der Leichtbauplatten 1 anliegen und ausgerichtet werden können. Zwischen den beiden Kanten 13 kann eine nutförmige Einbuchtung 17 als u-förmiges Profilteil ausgebildet sein. Sie dient der Steifigkeit und Aufnahme eines Schraubkopfs, falls eine Schraube eingesetzt wird.
Die Aussenabdeckung 11 umfasst ebenfalls ein gezogenes Profil aus Aluminium oder Kunststoff und weist in einem Abstand zu den beiden Kanten 19 je einen Anschlag 21 für die Stirnseiten 7 der Leichtbauplatten 1 auf. Parallel zu den beiden Kanten 19 kann aussen eine Nut 23 für die Aufnahme eines Keders ausgebildet sein. Zusätzlich kann zwischen den beiden Anschlägen 21 innen eine Nut 25 ausgebildet sein, die parallel zu den Kanten 19 verläuft.

Die Innenabdeckung 9 und die Aussenabdeckung 11 werden durch Klebstoff mit den Leichtbauplatten 1 verbunden. Zur Erhöhung der aufbringbaren Klebstoffmenge und zur Sicherstellung einer absolut sicheren durchgehenden Verklebung und Abdichtung können in den Schenkeln 10 und 12 der beiden Abdeckungen 9,11 eine oder mehrere Klebstoffnuten 27, 29 eingelassen sein. Die Verklebung der Aussen- und der Innenabdeckung 9,11 mit den Leichtbauplatten 1 genügt, diese dauerhaft und verwindungsfrei miteinander zu verbinden. Wird dennoch eine zusätzliche formschlüssige Verbindung verlangt, so können in der Vertiefung 17 selbstschneidende Schrauben 30 bis in die Nut 25 an der Aussenabdeckung 11 eingedreht werden.

In der Ausführungsform der Erfindung gemäss den Figuren 4-6 zur Verbindung zweier winklig angeordneter Leichtbauplatten 1 weist die Innenabdeckung 9 wiederum zwei Schenkel 10 vorzugsweise gleicher Länge auf, und in einem Abstand zu den Kanten 13 sind Anschläge 15 ausgebildet. Die beiden Schenkel 10 liegen in diesem Ausführungsbeispiel rechtwinklig und dienen für eine rechtwinklige Verbindung der Leichtbauplatten 1. Selbstverständlich könnte auch ein kleinerer oder grösserer als der rechte Winkel gewählt werden, falls die Leichtbauplatten 1 nicht lotrecht miteinander verbunden werden sollen. Die Aussenabdeckung 11 umfasst zwei geradlinig verlaufende Schenkel 12, welche durch ein Bogensegment 14 miteinander verbunden sind. In einem Abstand a zur Kante 19 liegt wiederum ein Anschlag 21, der die Lage der Leichtbauplatte 1 festlegt. Einer der beiden Anschläge 21 kann auch weggelassen werden, wenn beispielsweise am einen Schenkel 12 der Anschlag 21 als Aufnahme für die Kedernut 23 dient. Auch in diesem Ausführungsbeispiel kann an der Aussenabdeckung 11 eine nach innen gerichtete Nut 25 zur Aufnahme des Gewindes einer Schraube 30 ausgebildet sein. An der Innenabdeckung 9 treffen die beiden Schenkel 10 vorzugsweise nicht direkt aufeinander, sondern sind durch ein im 45° Winkel verlaufendes Zwischenstück 20, das als Schraubenkopfauflage dient, verbunden.
Die Verbindung der beiden rechtwinklig liegenden Leichtbauplatten 1 erfolgt durch Anlegen der letzteren an die innere Abdeckung 9 und durch nachfolgendes Auflegen der äusseren Abdeckung, wobei in den Klebstoffnuten 27 und 29 vor dem Auflegen der beiden Abdeckungen 9 und 11 eine genügende Menge Klebstoff aufgebracht worden ist. Die winklige Verbindung zweier Leichtbauplatten gemäss Figur 6 kann an den vertikal verlaufenden Kanten des Wohnwagens 1 oder aber längs der Verbindung zwischen den Seitenwänden und der Decke eingesetzt werden.

Im Ausführungsbeispiel gemäss den Figuren 7 - 9 wird eine Verbindung der Wände mit dem Boden dargestellt, welche beide ebenfalls aus Leichtbauplatten 1 hergestellt sind. Diese Verbindung könnte auch mit den in Figuren 4-6 gezeigten Abdeckungen 9,11 erfolgen. Die Aussenabdeckung 11 in diesem Ausführungsbeispiel weist eine asymmetrische Gestalt auf, da nur ein Schenkel 10 vorhanden ist, welcher die als Wand dienende Leichtbauplatte 1 abstützt und mit dieser verklebt ist. Die den Boden bildende Leichtbauplatte 1 wird von unten durch einen zusätzlichen, an der Innenabdeckung 9 ausgebildeten Schenkel 16 festgehalten. Dieser bildet zusammen mit einem kastenförmigen Teil 18 einen unteren Abschluss der Wohnwagenwand und schützt letztere gegen Beschädigungen. In diesem Ausführungsbeispiel wird die den Boden bildende Leichtbauplatte 1 nicht durch die Aussen- und die Innenabdeckungen 9 und 11 zusammengehalten, sondern zwischen den beiden Schenkeln 10 und 16 der Innenabdeckung. Die Aussenabdeckung 11 wird vorzugweise mit der Schraube 30 zusätzlich gesichert, da nur eine einseitige, d.h. eine Verklebung mit der die Wand bildenden Leichtbauplatte 1 vorliegt.

## Patentansprüche

1. Verbindungselement zum Verbinden von Leichtbauplatten (1), umfassend eine profilförmige Aussenabdeckung (11) und eine profilförmige Innnenabdeckung (9), dadurch gekennzeichnet, dass an der Aussenabdeckung (11) in einem Abstand (a) von einer der Längskanten (19) ein Anschlag (21) zum Anlegen der Stirnfläche (7) einer ersten Leichtbauplatte (1) ausgebildet ist und dass an der Innenabdeckung (9) in einem Abstand (b) von einer Längskante (13) ein Anschlag (15) für die Stirnfläche (7) der ersten oder der zweiten Leichtbauplatte (1) ausgebildet sind.

2. Verbindungselement nach Anspruch 1, dadurch gekennzeichnet, dass die Aussenabdeckung (11) und die Innenabdeckung (9) je zwei identische Schenkel (12,10) mit Klebstoffnuten (29,27) und je zwei Anschläge (21,15) umfassen.

3. Verbindungselement nach Anspruch 2, dadurch gekennzeichnet, dass die Schenkelpaare (12,10) je in einer gemeinsamen Ebene oder winklig zueinander liegend ausgebildet sind.

4. Verbindungselement nach einem der Ansprüche 2 oder 3, dadurch gekennzeichnet, dass die Anschläge (21,15) durch die Flanken von Nuten (23,17) tragenden Profilteilen gebildet werden.

5. Verbindungselement nach einem der Ansprüche 2 bis 4, dadurch gekennzeichnet, dass zwischen den beiden Schenkeln (12) der Aussenabdeckung (11) eine nach innen gerichtete Nut (25) zum Eindrehen einer selbstschneidenden Schraube (30) ausgebildet ist.

6. Verbindungselement nach einem der Ansprüche 2 bis 5, dadurch gekennzeichnet, dass an der Aussenabdeckung (11) die beiden Schenkel (12) durch ein bogenförmiges Segment (14) miteinander verbunden sind.

7. Verbindungselement nach Anspruch 1, dadurch gekennzeichnet, dass die Innenabdeckung (9) in der Verlängerung des ersten Schenkels (10) ein Hohl- oder Kastenprofil (18) anschliesst und sich über den zweiten Schenkel (10) hinaus erstreckt, dass am Kastenprofil (18) ein dritter Schenkel (16) ausgebildet ist, der parallel zum zweiten Schenkel (10) liegt und dass die Aussenabdeckung (11) nur einen mit der Leichtbauplatte (1) verbindbaren Schenkel (10) umfasst und durch eine Schraube (30) mit der Innenabdeckung (9) verbindbar ist.
